# EUROPEAN PATENT SPECIFICATION

(11) **EP 3 405 680 B1**
(45) Date of publication and mention of the grant of the patent: **20.05.2020**
(21) Application number: 17702733.1
(22) Date of filing: 20.01.2017
(51) Int. Cl.: F04D 29/42, F04D 29/22, F04D 29/62, F04D 29/02, F04D 13/04, B22F 3/115, B22F 7/08, C22C 32/00

(54) **TURBOPUMP WITH A SINGLE-PIECE HOUSING AND A SINGLE-PIECE IMPELLER**
TURBOPUMPE MIT EINSTUCKIGEM GEHÄUSE UND EINSTUCKIGEM LAUFRAD
TURBOPOMPE AVEC UN CARTER MONOBLOC ET UNE ROUE MONOBLOC

(30) Priority: 22.01.2016 US 201662286213 P; 06.06.2016 US 201615173773
(43) Date of publication of application: 28.11.2018
(73) Proprietor: Florida Turbine Technologies, Inc., Jupiter, Florida 33458 (US)
(72) Inventor: MILLER, Timothy, J., Jupiter, FL 33458 (US); PINERA, Alex, Jupiter, FL 33458 (US); BROOKS, Stephen, M., Jupiter, FL 33458 (US); APPLEBY, John, W., Jupitar, FL 33478 (US); LEONARD, Timothy, G., Palm Beach Gardens, FL 33418 (US)
(74) Representative: Tomkins & Co
(86) International application number: PCT/US2017/014259
(87) International publication number: WO 2017/127629

(56) References cited:
- EP-A1- 0 530 573
- US-A- 5 697 767

## Description

### TECHNICAL FIELD

The present disclosure relates generally to a centrifugal pump for a liquid rocket engine, and more specifically to a centrifugal pump manufactured with a single-piecehousing using a metal additive manufacturing process and having a ceramic coating on specific sections to smooth surfaces and prevent damage from exposure to an oxidizer.

### BACKGROUND

Metal additive manufacturing process is a form of 3D metal printing in which a part such as an impeller for a turbopump can be printed such as with a metal powder bed fusion process in which a layer of metal powder is laid down and a laser is used to fuse or melt the metal powder to form a solid metal. The metal printing process does not produce a smooth surface as would be found in a casting, a metal machining, or metal removal process to form the part.

Prior art manufacturing methods used to produce liquid rocket engine components have historically led to high manufacturing costs. A current challenge in the rocket propulsion industry base is lack of modernization in manufacturing processes and inefficiencies in production. With the low quantities inherent in space propulsion hardware, and an ever increasing drive toward reduced cost, there is an increased interest in design for manufacturability. An optimal balance between commercial best practices and advanced manufacturing techniques could be implemented to meet the future requirements of the rocket propulsion industry. There is potential for significant advancement in cost reduction, design and manufacturing for turbopumps through the application of additive manufacturing (AM). A liquid rocket engine oxidizer turbopump according to the prior art is disclosed in for example EP0530573 A1.

### SUMMARY

The present invention is a liquid rocket engine oxidizer turbopump as defined by the appended claims. A turbopump for a liquid rocket engine with an oxidizer pump and a fuel pump both driven by a turbine and common rotor shaft, where both pumps are formed from a strong base metal such as stainless steel, and where the oxidizer pump includes a protective coating. The protective coating may include enamel glass and/or a superalloy, such as MONDALOY™ material (Pratt & Whitney Rocketdyne Corporation) such as MONDALOY 100 or MONDALOY 200 to form a reaction resistant surface on the base metal in areas of the base metal that are exposed to an oxidizer during pumping. Any high pressure pump or turbine that requires high strength base material that is used to pump oxygen will have a protective coating in order to prevent the reaction of oxygen with the base metal material.

Alternatively, a substrate exposed to a high temperature such as in a rocket engine turbopump can include a composite coating made of a superalloy, such as MONDALOY, and enamel glass that is co-deposited using a thermal spray process. The MONDALOY coating provides a high strength base material with the properties of a MONDALOY material, while the enamel glass material mixed in with the MONDALOY material provides a burn resistance to the MONDALOY coating.

A turbopump such as a liquid oxygen (LOX) turbopump for a liquid rocket engine is formed using a metal additive manufacturing process in which a single-piece impeller is formed within a single-piece housing, the impeller being trapped within the single-piece housing. The housing is formed with a fluid inlet and a fluid outlet, namely a liquid oxygen inlet and a liquid oxygen outlet. The impeller is formed with an axial bore in which a shaft is inserted after the impeller and housing have been formed. Forward and aft bearing support surfaces are machined on to the outer surfaces of the impeller and then two bearings are inserted into the housing and secured by a tie bolt fastened on one end of the shaft. A forward cover plate encloses a forward opening of the housing and a buffer seal encloses an aft opening of the housing.

The cover plate and the buffer seal form support surfaces for outer races of the two bearings. The single-piece impeller is formed with forward and aft labyrinth seal teeth all as a single-piece, and the housing is formed with seal surfaces for the labyrinth teeth that form forward and aft labyrinth seals between the impeller and housing.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
FIG. 1 shows a cross section view of a LOX turbopump not according to the invention;
FIG. 2 shows a cross section view of a LOX turbopump according to the invention, having a single-piece housing;
FIG. 3 shows a liquid rocket engine turbopump with a coating of protective material**;**
FIG. 4 shows a close-up section view of a surface of the turbopump with the protective coating; and
FIG. 5 shows a close-up section view of a surface of the turbopump with a two-layer protective coating.

### DETAILED DESCRIPTION

The present invention is a liquid rocket engine oxidizer turbopump as defined by the appended claims. A preferred embodiment of the present invention is a liquid oxygen (LOX) turbopump used in a liquid rocket engine in which the single-piece rotor (which may also be referred to as the impeller) is formed by a metal additive manufacturing process and formed within the single-piece housing that is also formed by a metal additive manufacturing process.

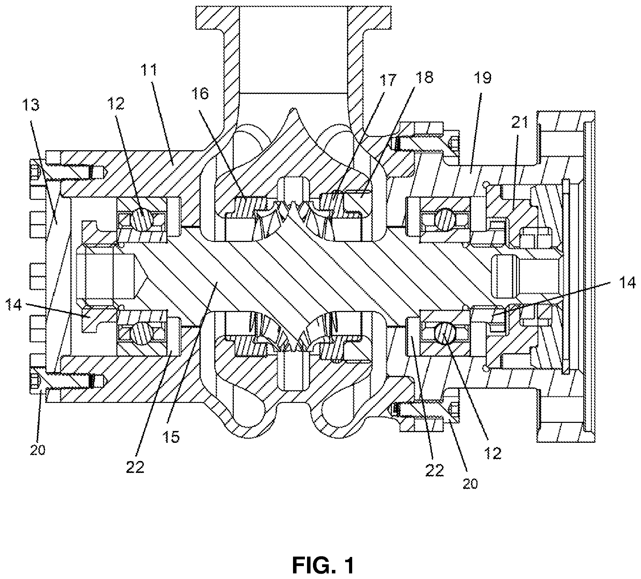

FIG. 1 shows a LOX turbopump not according to the invention, with an extremely efficient design. The LOX turbopump is formed from only eleven part numbers (not including fasteners) and is very compact. The pump is located in the center and is a back-to-back design similar to the space shuttle main engine (SSME) high pressure oxidizer turbopump (HPOTP). This reduces or eliminates rotor axial thrust imbalance. There is an inducer in front of each impeller 15 to improve cavitation performance and the impellers 15 are shrouded to minimize secondary flow leakage without requiring extremely tight tolerance. The impeller 15 is rotatable within the housing due to bearings 12 that straddle the impeller 15, and the impeller 15 is cooled by recirculating the inlet LOX with the natural pumping of the impeller 15. The bearings 12 are axially held on the impeller 15 by identical spanner nuts 14. To minimize assembly time and components, the impeller 15 is integral with the shaft. In other words, the impeller 15 functions as both the impeller 15 and the shaft, and the turbopump does not include a separate shaft in addition to the impeller. To minimize cost, the two bearings 12 are the same, the spanner nuts 14 are the same, and the buffer seal 21 is the same as the fuel pump buffer seal. The housing 11 also includes a fluid inlet and a fluid outlet, such as a liquid oxygen inlet and a liquid oxygen outlet. Finally, since the size is so small and the discharge pressure is low, the rotor design speed is low so the stresses on the parts will be extremely low.

The LOX turbopump in FIG. 1 includes a cover plate 13 held on by several screws 20, a forward seal 16, and aft seal 17, a main housing 11, a nut 18 to secure the forward and aft seals 16 and 17 to the housing 11, an aft housing 19, and springs 22.

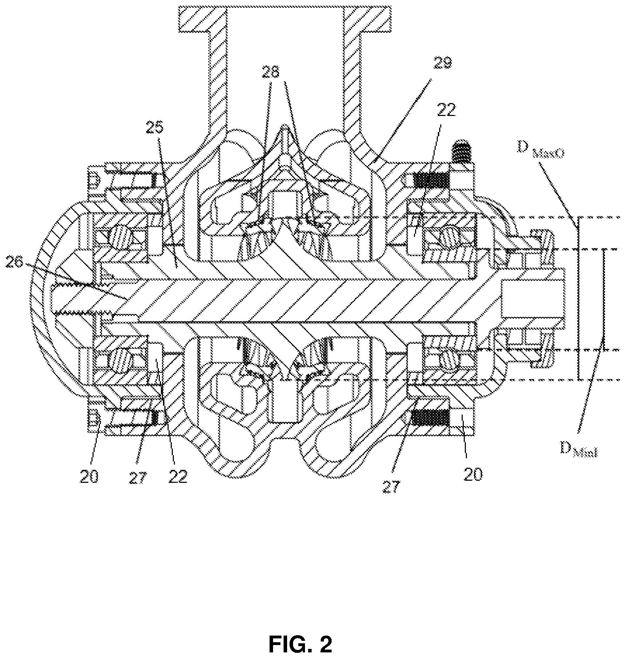

FIG. 2 shows a LOX turbopump according to the invention, that, in this embdiment, is formed by a metal additive manufacturing process in which a single-piece (or one-piece) impeller 25 is formed within a single-piece (or one-piece) housing 29. The double suction impeller 25 is manufactured within the housing 29 and the impeller 25 is rotatable within the housing 29 due to bearings 12. The housing 29 includes a liquid oxygen inlet and a liquid oxygen outlet, screws 20, and springs 22 as discussed above regarding FIG. 1. Forward and aft bearing support surfaces may be machined onto the outer surfaces of the impeller, which support a forward bearing and an aft bearing, respectively, to rotatably support the impeller 25. Additionally, the forward seal 16, the aft seal 17, and the nut 18 of the FIG. 1 embodiment are eliminated and the requirement to finish machining of the housing for the bearing outer diameter (OD) 27 of the FIG. 1 embodiment is eliminated. Additionally, the FIG. 2 embodiment provides for the elimination of all machining operations from the shaft 26, as the shaft is inserted into the impeller 25 as a separate component, as discussed below. The FIG. 2 embodiment also eliminates the aft housing 19 and associated interface flange, eliminates the seal and finish machining, and eliminates the screws required in the FIG. 1 embodiment.

In the FIG. 2 design, a double suction impeller 25 is trapped within the single-piece housing 29. Put another way, the housing 29 has a minimum inner diameter D_{MinI} and the impeller 25 has a maximum outer diameter D_{MaxO}, the maximum outer diameter D_{MaxO} of impeller 25 being greater than the minimum inner diameter D_{MinI} of the housing 29. This is achieved by printing the components simultaneously within a metal additive manufacturing process such as the selective laser melting (SLM) machine. Then, powder and support structure (if required) removal is performed. The impeller 25 includes an axial bore 30 into which a shaft 26 is inserted once the impeller 25 is created within the housing 29. The bearings 12 are installed on the ends of the shaft 26 and a shaft tie bolt is threaded on one end of the shaft 26 to secure the bearings 12, namely a forward bearing and an aft bearing, between the housing 29 and the impeller 25. Conventional manufacturing is required for the bearings 12 due to high precision requirements needed. The cover plate and buffer seal form support surfaces for outer races of the bearings 12. The impeller 25 is formed with forward and aft labyrinth seal teeth all as a single-piece, and the housing 29 is formed with seal surfaces for the labyrinth teeth that form forward and aft labyrinth seals 28 between the impeller 25 and the housing 29. With the exception of the shaft tie-bolt and the shaft seal, all other components are printed on an SLM machine.

The single-piece housing 29 of FIG. 2 eliminates potential gaps between surfaces that would be held together by bolts, such as in the two-piece housing 11 shown in FIG. 1. Additionally, stress from internal pressure would be evenly spread throughout the housing 29 without having to pass from one section to another, such as through the two bolts 20 that connect the main housing 11 and aft housing 19 in FIG. 1.

Rotor balancing is another critical area. Typically, an assembly balance of the rotor is performed for turbopump rotors. That is, the full rotor, such as the impeller 25 of FIG. 2, is assembled and balanced on a balance machine. Since the impeller 25 is printed inside the single-piece housing 29, this method cannot be used without special tooling. For the impeller of the turbopump according to the present invention, a method of trim balancing is used where the impeller 25 is spun up to various high speeds and accelerometers on the housing along with a proximity probe looking at the impeller 25 is used to determine the impeller imbalance. The imbalance is corrected by grinding locations on each end of the shaft.

A preferred embodiment of the present invention is a LOX turbopump used in a liquid rocket engine in which the impeller 25 is formed by a metal additive manufacturing (MAM) process and formed within a single-piece housing 29 that is also formed by a metal additive manufacturing process. By printing the impeller 25 within a single-piece housing 29, a dramatic reduction in part count, procurement activities, and assembly time is achieved over the prior art, which directly translates into a reduction in recurring cost and lead time. These reductions are estimated to reduce the cost of the LOX turbopump by approximately 40%. The turbomachinery for a typical rocket engine accounts for about one-third of the cost of the total engine. Thus, significant reductions in turbomachinery cost have large impacts on the overall cost of the engine.

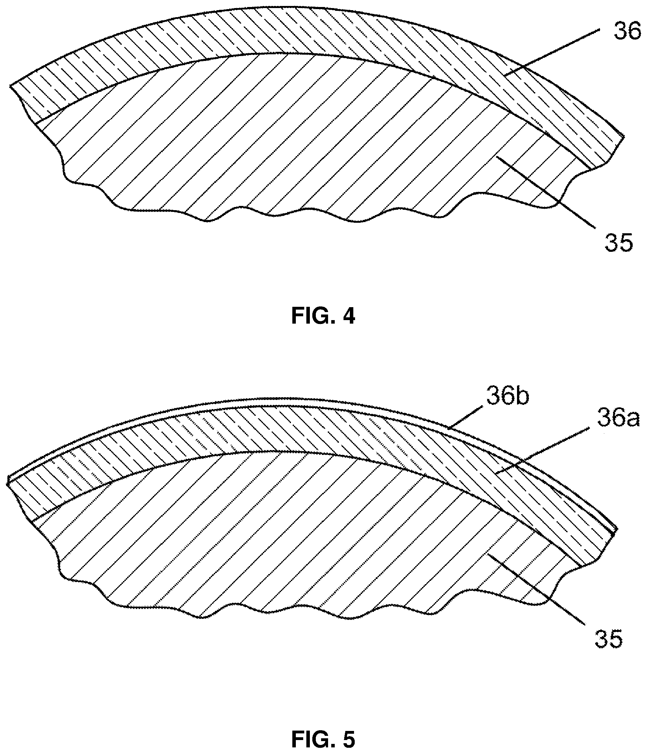

The metal printing process produces a relatively rough surface on the parts. FIG. 4 shows a surface 35 of the turbopump covered with a protective layer 36. The layer 36 may be a single material (for example, MONDALOY), a mixture of materials (for example, a mixture of MONDALOY and enamel glass powder, and/or oxide powder), or may include several distinct layers (for example, a layer of MONDALOY on the surface 35 and a enamel glass layer on the MONDALOY layer). Thus, according to a further aspect of the present invention, a protective coating of 36 of one or more materials is applied, this to form a smooth surface that functions to increase the efficiency of the pump. Because the impeller 25 is formed within a single-piece housing 29, a machining tool that would form a smooth surface cannot be used because of lack of space to insert the tool. All surfaces of the turbopump that are exposed to the oxidizer (liquid oxygen) may have a protective coating 36 of one or more layers of one or more protective materials, such as a material that is resistant to corrosion, oxidation, impact, and/or heat. In one embodiment, an enamel glass coating can be applied over the required surfaces while the impeller and even the housing are rotating to form a smooth surface. The enamel glass protective coating 36 would also provide a burn resistance to the pump surfaces that would be exposed to the liquid oxygen. Because of the use of the burn resistant protective coating, INCONEL® 718 (Huntington Alloys Corporation) can be used as the base metal material which is strong enough for use as the rotor material and cheap enough to keep costs down. INCONEL 718 is a nickel based superalloy which retains high strength at elevated temperatures and has high strength up to 1,300 degrees F, good cryogenic ductility, and good weldability. The enamel glass coating 36 is an ambient temperature applied coating using a spray or a brush to apply to selected surfaces. Or, the entire turbopump with the impeller 25 and the housing 29 can be submerged within a slurry of the liquid coating material to apply the coating 36. A masking tape can be used to mask surfaces 35 where the coating 36 is not to be applied.

The turbopump is formed using a metal powder bed fusion process in which thin layers of powder are applied to a platen, and then a laser is used to fuse or melt the powder to form a solid metal material. Subsequent layers of the powder are laid down and then selectively fused by the laser to build the parts. The turbopump is built up along the rotational axis of the turbopump in a vertical direction with surfaces between the impeller 25 and the housing 29 for the forward and aft bearings 12 to be placed. This way both the housing 29 and the impeller 25 can be formed.

After the impeller 25 and housing 29 have been formed by the powder bed fusion process, the turbopump is placed in a horizontal position and masking tape used over surfaces 35 that will not have the enamel glass protective coating 36 applied. The enamel glass coating 36 is formed over selected surfaces 35 by using a spray nozzle or a brush to apply the coating 36 while the impeller 25 is slowly rotating within the housing 29 to spread the coating 36. The housing 29 can also be rotated. The turbopump is then fired to harden the glass coating. The coating 36 is applied over the rough surface of the printed part to not only smooth the surface, but to add protection against heat, against oxidation, against erosion, and even against damage from a foreign object damage (FOD). Any masking tape used can be removed before the firing process. After the coating 36 has been hardened, the two bearings 12 are inserted and the open ends of the housing 29 are enclosed with cover plates 13.

The impeller 25 and the housing 29 are formed with bearing support surfaces that can be machined afterwards because the bearing surfaces are located close to the two open ends of the single-piece housing 29. Bearings 12 can then be inserted into position to rotatably support the rotor 25 within the housing 29 and the open end or ends of the housing closed by securing a cover plate 13. The opposite end would be connected to a driving mechanism such as an input shaft from a turbine.

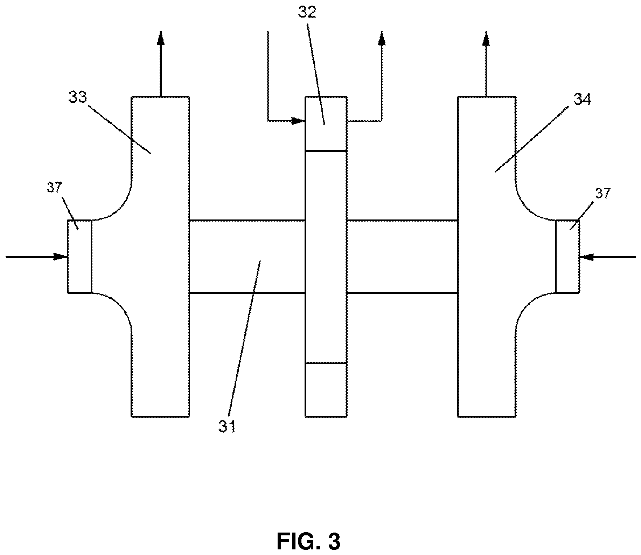

The rocket engine uses a turbopump to pump both a liquid fuel and a liquid oxidizer to a common combustion chamber. The liquid oxidizer is liquid oxygen and the liquid fuel could for example be liquid hydrogen. A common shaft 31 is driven by a turbine 32 with the fuel pump 33 on one end and the oxidizer pump 34 on the opposite end (as shown in FIG. 3). The oxidizer pump 34 and the fuel pump 33 are typically centrifugal pumps because of the high pressures obtained. To prevent cavitation in the centrifugal pumps, an inducer 37 is used upstream of the oxidizer pump 34 and/or the fuel pump 33 to increase the pressure so as to eliminate cavitation in the higher pressure pump. To prevent the combustion resistance in the presence of high temperature and high pressure liquid or gaseous oxygen, the surfaces 35 of the turbopump that are exposed to the oxidizer are coated with a protective coating 36.

In a second embodiment, the protective coating 36 may include a superalloy, such as a MONDALOY material such as at least one of the MONDALOY 100 or 200 materials. Thus, the turbo-pump can be constructed with the prior art metal materials for strength and light weight such as stainless steels or INCONEL, but have the combustion resistance to the high temperature and high pressure liquid or gaseous oxygen due to the MONDALOY coating on its surfaces on which the liquid or gaseous oxygen would make contact. No MONDALOY coating is required on the liquid hydrogen fuel pumps. The MONDALOY material is disclosed in US 2010/0266442 A1 by Jacinto et al., published on October 21, 2010, and entitled BURN-RESISTANT AND HIGH TENSILE STRENGTH METAL ALLOYS.

The MONDALOY coating can also be used on other high pressure pumps or turbine that are exposed to liquid or gaseous oxygen. Because of the high pressure, the base metal material must be a high strength material such as stainless steel. Certain high strength materials are very reactive to oxygen. If the pump or turbine is exposed to oxygen, then the MONDALOY protective coating 36 on the surfaces 35 that are exposed to the oxygen will provide for the high strength required while also protecting the base material from reacting to the oxygen.

In another embodiment of the present invention, an enamel glass powder is mixed in with the MONDALOY powder to produce a protective coating 36 formed from a composite of MONDALOY and enamel glass that will have properties of the MONDALOY material and with a burn resistance that is produced with the enamel glass material. When the glass powder is fired, it becomes an enamel.

In another embodiment, the MONDALOY and enamel glass each form a protective coating. The MONDALOY and an enamel glass are deposited using a thermal spray process. For example, the MONDALOY layer 36a may be on the surfaces 35 of the turbopump that are exposed to the oxidizer and the enamel glass layer 36b may be on the MONDALOY layer (put another way, the MONDALOY layer 36a may be located beneath the enamel glass layer 36b, as shown in FIG. 5). The powder would be made of the enamel glass composition.

In another embodiment, the MONDALOY and enamel glass are combined to form a multi-component protective coating 36. The two constituents can be pre-blended, independently injected into a thermal plumb to allow for functional grading of the coating, or co-deposited on the surface 35 using a thermal spray process. Use of the fired enamel glass coating with the MONDALOY material has been shown to arrest burning of the metal substrate. Thus, use of the enamel glass constituent processed as a powder and deposited using thermal spray would enhance the burn resistance of the MONDALOY material in the coating.

In another embodiment, a surface can be created by coating a multiple component surface coating of MONDALOY and an oxide that is co-deposited using a thermal spray process. The two constituents can be pre-blended or independently injected into the thermal plumb to allow for functional grading of the coating. The addition of the oxide would enhance the burn resistance of the MONDALOY coating.

In still another embodiment, a surface can be created with high oxide content MONDALOY coating 36 through adjustment of the thermal spray parameters. MONDALOY powder is produced with little or no oxide impurities. Thermal spraying in air creates oxides in the coating deposit due to the interaction of the metal powder with a thermal heating source. Thermal spray parameters can be adjusted to regulate the oxide content of the coating deposit. The addition of the oxide content will enhance a burn resistance of the MONDALOY coating.

Instead of the enamel glass powder, an oxide powder can be used to produce similar properties for the protective coating 36 containing MONDALOY to resist burning. As a non-limiting example, aluminum oxide or yttria stabilized zirconia can be added as the oxide to the MONDALOY powder to create the coating. Combinations of these three materials (MONDALOY, enamel glass, and oxide powder) can be used to produce the coating. Thus, a coating can be produced from MONDALOY powder and glass powder, or from MONDALOY powder and oxide powder, or from MONDALOY powder and glass powder and oxide powder.

In still another embodiment of the present invention, a burn resistant protective coating 36 that uses enamel glass fired with MONDALOY powder can be produced that will allow for higher operating temperatures (prevent thermal creep) and better manage the coefficient of thermal expansion mismatch. This embodiment will add MONDALOY powder after spraying on enamel slurry before firing the composition. The attributes of the coating are burn resistance, low cost, and easy application to complex geometry parts or internal passages such as in air cooled airfoils.

It will be appreciated by persons skilled in the art that the present invention is not limited to what has been particularly shown and described herein above. In addition, unless mention was made above to the contrary, it should be noted that all of the accompanying drawings are not to scale. A variety of modifications and variations are possible in light of the above teachings without departing from the scope of the invention, which is limited only by the following claims.

## Claims

1. A liquid rocket engine oxidizer turbopump comprising:
a housing (29) with a liquid oxygen inlet and a liquid oxygen outlet;
an impeller (25) rotatable within the housing (29); and
a forward bearing (12) and an aft bearing (12) to rotatably support the impeller (25) within the housing (29),
both the housing (29) and the impeller (25) being formed as a single-piece with the impeller (25) trapped within the housing (29).

2. The liquid rocket engine oxidizer turbopump of claim 1, wherein an entirety of surfaces (35) of the oxidizer turbopump that are exposed to an oxidizer during pumping have a protective coating (36) of at least one protective material to prevent reaction of the oxidizer with the surfaces (35).

3. The liquid rocket engine oxidizer turbopump of claim 2, wherein the protective coating (36) includes enamel glass.

4. The liquid rocket engine oxidizer turbopump of claim 3, wherein the enamel glass is a first layer (36b) of the protective coating (36), the protective coating (36) further including a second layer (36a) that includes a superalloy, the second layer (36a) being beneath the first layer (36b).

5. The liquid rocket engine oxidizer turbopump of claim 4, wherein the superalloy is a MONDALOY material, the MONDALOY material being at least one of MONDALOY 100 and MONDALOY 200.

6. The liquid rocket engine oxidizer turbopump of claim 2, wherein the protective coating (36) includes a superalloy.

7. The liquid rocket engine oxidizer turbopump of claim 1, wherein the oxidizer turbopump is a centrifugal pump.

8. The liquid rocket engine oxidizer turbopump of claim 2, wherein the protective coating (36) is a mixture that includes MONDALOY powder and enamel glass powder that is deposited using a thermal spray process.

9. The liquid rocket engine oxidizer turbopump of claim 8, wherein the coating (36) mixture further includes an oxide.

10. The liquid rocket engine oxidizer turbopump of claim 9, wherein the oxide is one of aluminum oxide and yttria stabilized zirconia.

11. The liquid rocket engine oxidizer turbopump of claim 1, wherein: the housing (29) has an inner minimum diameter;
the impeller (25) has a maximum outer diameter greater than the inner minimum diameter of the housing (29).

12. The liquid rocket engine oxidizer turbopump of claim 11, wherein:
the impeller (25) includes an axial bore (30); and
a shaft (26) is inserted within the axial bore (30).

13. The liquid rocket engine oxidizer turbopump of claim 2, wherein the impeller (25) is manufactured within the housing (29) and the protective coating (36) is deposited on surfaces (35) within the single-piece housing (29).

## Patentansprüche

1. Oxidationsmittel-Turbopumpe für ein Flüssigkeitsraketentriebwerk, mit:
einem Gehäuse (29) mit einem Flüssigsauerstoffeinlass und einem Flüssigsauerstoffauslass;
einem Laufrad (25), das innerhalb des Gehäuses (29) drehbar ist; und
einem vorderen Lager (12) und einem hinteren Lager (12) zum drehbaren Lagern des Laufrades (25) innerhalb des Gehäuses (29),
wobei sowohl das Gehäuse (29) als auch das Laufrad (25) einstückig ausgebildet sind, wobei das Laufrad (25) im Gehäuse (29) eingeschlossen ist.

2. Oxidationsmittel-Turbopumpe für ein Flüssigkeitsraketentriebwerk nach Anspruch 1, wobei eine Gesamtheit aller Oberflächen (35) der Oxidationsmittel-Turbopumpe, die während des Pumpens einem Oxidationsmittel ausgesetzt sind, eine Schutzbeschichtung (36) aus mindestens einem Schutzmaterial aufweist, um eine Reaktion des Oxidationsmittels mit den Oberflächen (35) zu verhindern.

3. Oxidationsmittel-Turbopumpe für ein Flüssigkeitsraketentriebwerk nach Anspruch 2, wobei die Schutzbeschichtung (36) Emailglas umfasst.

4. Oxidationsmittel-Turbopumpe für ein Flüssigkeitsraketentriebwerk nach Anspruch 3, wobei das Emailglas eine erste Schicht (36b) der Schutzbeschichtung (36) ist, wobei die Schutzbeschichtung (36) zusätzlich eine zweite Schicht (36a) aufweist, die eine Superlegierung umfasst, wobei die zweite Schicht (36a) unter der ersten Schicht (36b) angeordnet ist.

5. Oxidationsmittel-Turbopumpe für ein Flüssigkeitsraketentriebwerk nach Anspruch 4, wobei die Superlegierung ein MONDALOY-Material ist, wobei das MONDALOY-Material mindestens eines aus MONDALOY 100 und MONDALOY 200 ist.

6. Oxidationsmittel-Turbopumpe für ein Flüssigkeitsraketentriebwerk nach Anspruch 2, wobei die Schutzbeschichtung (36) eine Superlegierung umfasst.

7. Oxidationsmittel-Turbopumpe für ein Flüssigkeitsraketentriebwerk nach Anspruch 1, wobei die Oxidationsmittel-Turbopumpe eine Kreiselpumpe ist.

8. Oxidationsmittel-Turbopumpe für ein Flüssigkeitsraketentriebwerk nach Anspruch 2, wobei die Schutzbeschichtung (36) eine Mischung ist, die MONDALOY-Pulver und Emailglaspulver umfasst und unter Verwendung eines thermischen Spritzverfahrens aufgebracht wird.

9. Oxidationsmittel-Turbopumpe für ein Flüssigkeitsraketentriebwerk nach Anspruch 8, wobei die Mischung der Beschichtung (36) zusätzlich ein Oxid umfasst.

10. Oxidationsmittel-Turbopumpe für ein Flüssigkeitsraketentriebwerk nach Anspruch 9, wobei das Oxid eines aus Aluminiumoxid- und Yttriumoxid-stabilisiertem Zirkonoxid ist.

11. Oxidationsmittel-Turbopumpe für ein Flüssigkeitsraketentriebwerk nach Anspruch 1, wobei:
das Gehäuse (29) einen inneren minimalen Durchmesser aufweist; und
das Laufrad (25) einen maximalen Außendurchmesser aufweist, der größer ist als der innere minimale Durchmesser des Gehäuses (29).

12. Oxidationsmittel-Turbopumpe für ein Flüssigkeitsraketentriebwerk nach Anspruch 11, wobei:
das Laufrad (25) eine axiale Öffnung (30) aufweist; und
eine Welle (26) innerhalb der axialen Öffnung (30) eingesetzt ist.

13. Oxidationsmittel-Turbopumpe für ein Flüssigkeitsraketentriebwerk nach Anspruch 2, wobei
das Laufrad (25) innerhalb des Gehäuses (29) hergestellt ist und die Schutzbeschichtung (36) auf Oberflächen (35) innerhalb des einstückigen Gehäuses (29) aufgebracht ist.

## Revendications

1. Turbopompe à comburant liquide pour moteur-fusée comprenant :
un carter (29) avec une entrée d'oxygène liquide et une sortie d'oxygène liquide ;
une roue (25) pouvant tourner dans le carter (29) ; et
un palier avant (12) et un palier arrière (12) pour supporter en rotation la roue (25) à l'intérieur du carter (29),
le carter (29) ainsi que la roue (25) étant formés d'un seul tenant avec la roue (25) piégée à l'intérieur du carter (29).

2. Turbopompe à comburant liquide pour moteur-fusée selon la revendication 1, dans laquelle la totalité des surfaces (35) de la turbopompe à comburant qui est exposée à un comburant pendant le pompage a un revêtement de protection (36) d'au moins un matériau de protection pour empêcher la réaction du comburant avec les surfaces (35).

3. Turbopompe à comburant liquide pour moteur-fusée selon la revendication 2, dans laquelle le revêtement de protection (36) comprend du verre émaillé.

4. Turbopompe à comburant liquide pour moteur-fusée selon la revendication 3, dans laquelle le verre émaillé est une première couche (36b) du revêtement de protection (36), le revêtement de protection (36) comprenant en outre une seconde couche (36a) qui comprend un superalliage, la seconde couche (36a) étant sous la première couche (36b).

5. Turbopompe à comburant liquide pour moteur-fusée selon la revendication 4, dans laquelle le superalliage est un matériau MONDALOY, le matériau MONDALOY étant au moins l'un parmi le MONDALOY 100 et le MONDALOY 200.

6. Turbopompe à comburant liquide pour moteur-fusée selon la revendication 2, dans laquelle le revêtement de protection (36) comprend un superalliage.

7. Turbopompe à comburant liquide pour moteur-fusée selon la revendication 1, dans laquelle la turbopompe à comburant est une pompe centrifuge.

8. Turbopompe à comburant liquide pour moteur-fusée selon la revendication 2, dans laquelle le revêtement de protection (36) est un mélange qui comprend de la poudre MONDALOY et de la poudre de verre émaillé qui est déposé à l'aide d'un procédé de pulvérisation thermique.

9. Turbopompe à comburant liquide pour moteur-fusée selon la revendication 8, dans laquelle le mélange de revêtement (36) comprend en outre un oxyde.

10. Turbopompe à comburant liquide pour moteur-fusée selon la revendication 9, dans laquelle l'oxyde est l'un parmi un oxyde d'aluminium et une zircone stabilisée à l'oxyde d'yttrium.

11. Turbopompe à comburant liquide pour moteur-fusée selon la revendication 1, dans laquelle :
le carter (29) a un diamètre minimum interne ;
la roue (25) a un diamètre externe maximum supérieur au diamètre minimum interne du carter (29).

12. Turbopompe à comburant liquide pour moteur-fusée selon la revendication 11, dans laquelle :
la roue (25) comprend un alésage axial (30) ; et
un arbre (26) est inséré dans l'alésage axial (30).

13. Turbopompe à comburant liquide pour moteur-fusée selon la revendication 2, dans laquelle la roue (25) est fabriquée dans le carter (29) et le revêtement de protection (36) est déposé sur des surfaces (35) à l'intérieur du carter (29) qui est d'un seul tenant.
